# EUROPEAN PATENT SPECIFICATION

(11) **EP 1 453 056 B1**
(45) Date of publication and mention of the grant of the patent: **16.04.2008**
(21) Application number: 03019280.1
(22) Date of filing: 26.08.2003
(51) Int. Cl.: G11B 33/14

(54) **Tape drive with fan on take-up hub**
Bandlaufwerk mit Gebläse auf der Aufrollnabe
Dispositif d'entraînement de bande avec souffleur sur le moyeu d'enroulement

(30) Priority: 27.02.2003 US 337224
(43) Date of publication of application: 01.09.2004
(73) Proprietor: TANDBERG DATA ASA, 0884 Oslo (NO)
(72) Inventor: Hoelsaeter, Harvard, 0861 Oslo (NO); Holmedal, Harvard, 0463 Oslo (NO); Jegerstedt, Bjarte, 0169 Oslo (NO)
(74) Representative: Tönhardt, Marion

(56) References cited:
- GB-A- 2 142 786
- US-A- 4 163 996
- US-A- 4 316 589
- US-A- 5 829 712
- US-A- 5 923 496
- US-A1- 2001 038 602

## Description

### BACKGROUND OF THE INVENTION

### Field of the Invention

The present invention is directed to a fan for cooling internal components in a magnetic tape drive.

### Description of the Prior Art

During the operation of a magnetic tape drive, wherein data are transferred to and from a magnetic recording tape, heat is generated by a number of components, including the motors which are used to rotate one or both tape reels in the drive. Conventionally, one or more fans is provided with fan blades rotating next to an opening in the housing of the tape drive. Such a fan, however, itself requires a motor to rotate the blades, and the fan motor thus constitutes an additional heat source if it is located within the housing of the tape drive. Moreover, if the fan motor is located inside of the tape drive housing, this occupies space which can present an impediment to mounting other components inside of the tape drive, or may require that the tape drive housing be made larger.

Alternatively, if the fan is mounted so that its motor is at the exterior of the tape drive housing, this presents an impediment to mounting the tape drive in a receptacle having a standardized form factor, which usually is a rectangular box of standardized dimensions.

Moreover, the presence of one or more motor-driven fans increases the overall power consumption of the tape drive.

US 5,923,496 relates to a heat diffuser for a magnetic tape drive. The tape drive includes a motor which has a drive shaft and drives a drive roller in the cartridge to move a magnetic tape in the cartridge. A fan assembly including blades is produced as a separate component and is mounted to the drive shaft so as to be rotated by the drive shaft. The fan assembly circulates air beneath a molded, one-piece chassis. Air enters a bezel in the front of the drive and exits through vent holes in the rear of a pan of the drive.

US 5,829,712 relates to a magnetic tape cassette reel having a lower flange and an upper flange provided on both widthwise ends of the magnetic tape on the reel main body. On the upper surface of the lower flange a recessed portion is formed and functions as a path of the air film caught between the layers of the magnetic tape woundaround the reel main body.

### SUMMARY OF THE INVENTION

It is an object of the present invention to provide a tape drive for a magnetic data transfer between a magnetic recording head in the tape drive and a magnetic recording tape, which is effectively fan-cooled without the fan occupying significant additional space inside or outside of the tape drive housing.

It is a further object of the present invention to provide a fan-cooled tape drive wherein the fan cooling does not significantly increase the overall power consumption of the tape drive.

These objects are achieved in accordance with the present invention having a motor-driven tape reel therein, the tape reel having a tape hub and top and bottom flanges between which tape is wound, wherein the bottom side of the bottom flange of the reel is provided with a fan blade assembly. The fan blade assembly is rotated simultaneously with the tape reel, by the same motor that rotates the tape reel. Access openings for air are located in a suitable wall of the tape drive, such as the bottom thereof formed by the chassis, so that rotation of the fan blades draws air from the exterior of the tape drive into the interior of the tape drive.

For directing, within the interior of the tape drive, the air drawn into the tape drive by the fan blades, in an embodiment of the invention, a distributor baffle can be provided, at least a portion of which is disposed in the air flow path of the air being drawn into the tape drive. In a version of this embodiment, the distributor baffle can be circular and surround the fan blades, and can have openings in a bottom thereof communicating with the opening or openings through which the air is drawn into the tape drive. Some of these openings in the distributor baffle can be positioned so as to direct the air below the circuit board in the tape drive, on which electrical and mechanical components are mounted. Others of these openings can be disposed so as to direct the incoming air toward the top of the circuit board and/or to generally circulate the incoming air in the interior of the tape drive.

### DESCRIPTION OF THE DRAWINGS

Figure 1 is a view, as seen from below, of a take-up reel for a tape drive, with a fan assembly at the bottom of the bottom flange.
Figure 2 is a perspective view of a tape drive constructed and operating in accordance with the present invention, disposed bottom side up and with the motor mount removed, with arrows indicating air flow produced by operation of the fan assembly.
Figure 3 shows the tape drive of Figure 2 with the motor mount in place.
Figure 4 is a perspective view from above of the tape drive in accordance with the invention, with the top of the tape drive housing removed, and without the take-up reel therein, with arrows indicating air flow in the interior of the tape drive.
Figure 5 shows the tape drive of Figure 4, with the take-up reel in place.

### DESCRIPTION OF THE PREFERRED EMBODIMENTS

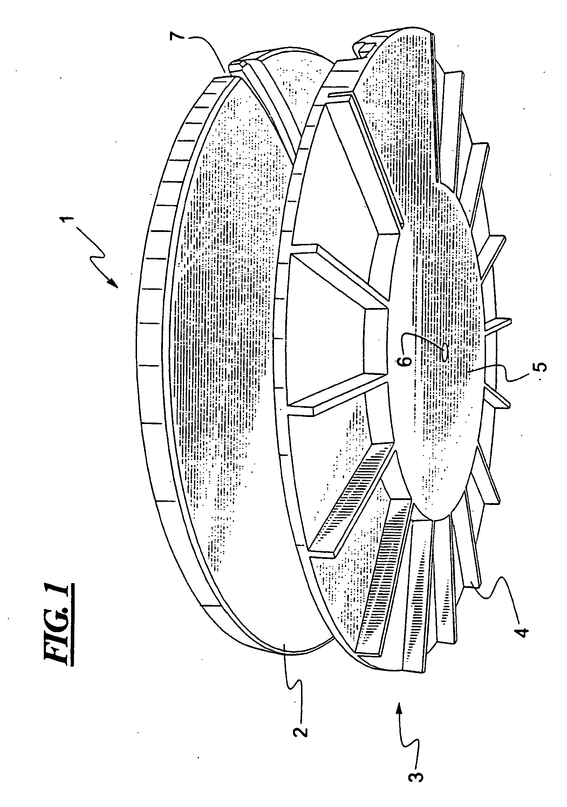

As shown in Figure 1, the bottom flange 3 of a take-up reel 1 of a tape drive has a bottom surface on which a fan assembly is formed. The fan assembly has a hub 5 from which a number of fan blades 4 radiate. The flange 3 and the fan assembly will rotate around a center 6.

The take-up reel 1 has a top flange 2 with a channel 7 therein to facilitate threading and unthreading of the magnetic recording tape on the take-up reel, however, this channel does not perform any function relevant to the present invention.

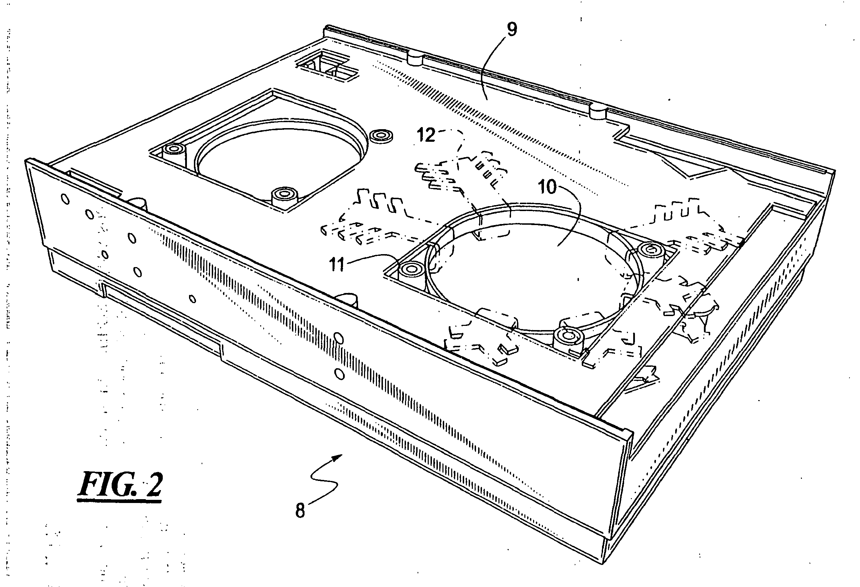

The tape drive 8 turned bottom side up is shown in Figure 2, exposing the chassis 9 to which, among other things, a motor for rotating the take-up reel 1, and the fan assembly therewith, will be mounted. The motor will project through an opening 10 in the circuit board 9. Rotation of the fan assembly will draw air into the interior of the tape drive 8 as schematically indicated by the tails of the arrow 12. This air will flow over the edge of the opening 10 and into the interior of the tape drive 8.

The motor will be mounted at three grommets 11, which receive screws.

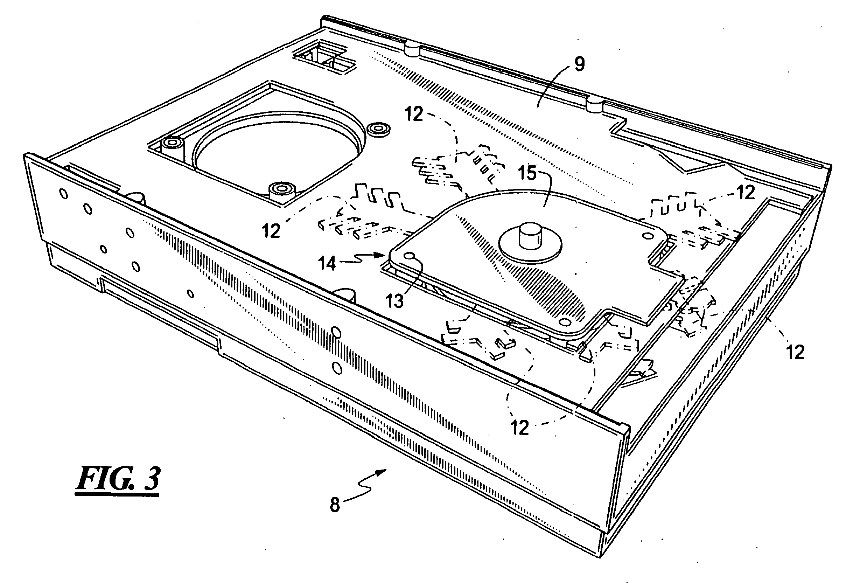

The tape drive 8 with the motor assembly 14 mounted thereto is shown in Figure 3. The motor itself projects into the interior of the tape drive 8 and is mounted to a motor mount plate 15. The motor mount plate 15 is secured to the grommets 11 by screws 13. The grommets 11 project slightly beyond the exterior surface of the circuit board 9, so that a space is maintained between the motor mount plate 15 and the circuit board 9, thereby allowing air to flow into the interior of the tape drive 8 as indicated by the aforementioned arrows 12.

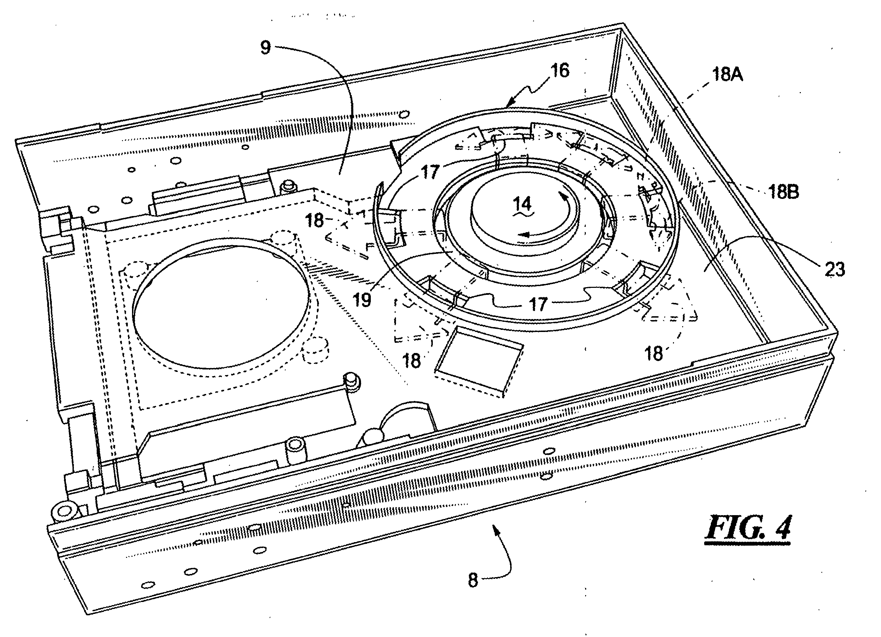

The interior of the tape drive 8, with the top of the tape drive 8 removed, and without the take-up reel 1 in place, is shown in Figure 4. As indicated therein, the motor assembly 14 will produce rotation as indicated by the double-headed curved arrow, operating the fan assembly to draw air into the interior of the tape drive 8. The arrowheads 18 indicate the direction of air flow into the interior of the tape drive 8, consistent with the schematic indications of the tails of the arrows 12 shown in Figures 2 and 3.

As can be seen in Figure 4, a chassis surface 23 is mounted in the interior of the tape drive 8. Heavier mechanical components are mounted to the chassis surface 23. The printed circuit board 9 is disposed relative to the chassis surface 23 so that a space exists between the printed circuit board 9 and the chassis surface 23.

A distributor baffle 16 is mounted concentrically with the motor assembly 14 and the fan assembly and has openings therein which at least partially overlap openings in the circuit board 9 so that air flowing into the interior of the tape drive 8 via an annular gap 19 between the motor assembly 14 and the distributor baffle 16 flows through these openings and beneath the printed circuit board 9, as indicated by the larger arrowheads 18. Air flowing through other openings 17, because of their proximity to sidewalls of the housing of the tape drive 8, will be divided as indicated by the double arrows 18A and 18B and generally circulate within the housing of the tape drive 8, including the space between the circuit board 9 and the chassis surface 23.

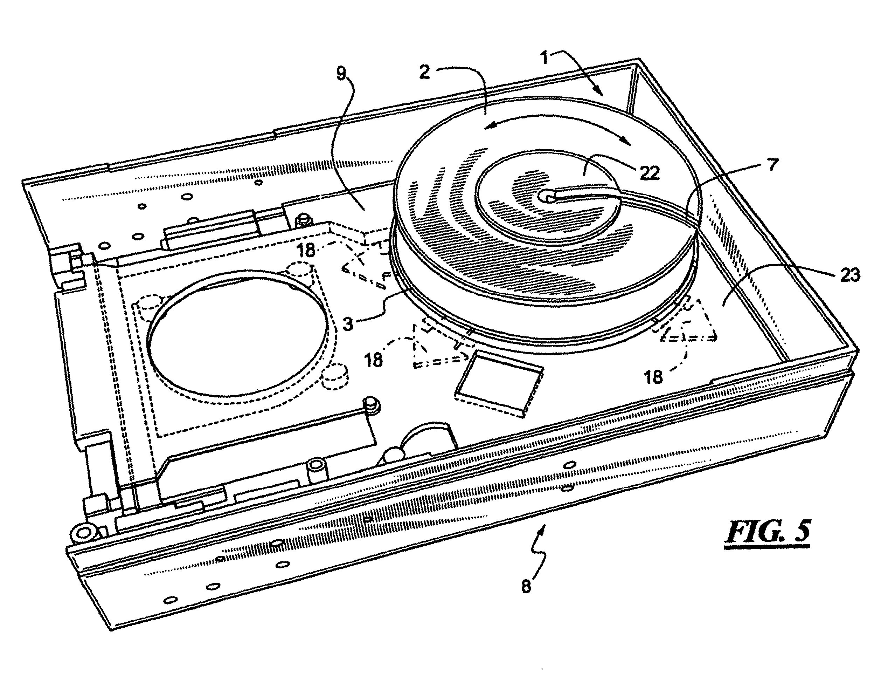

The tape drive 8 is again shown in Figure 8 with the take-up reel 1 in place, engaged with the motor assembly 14 for rotation thereof as indicated by the curved double-headed arrow. As can be seen in Figure 5, the take-up reel 1 has an upper flange 2 mounted on a hub 22, to which the lower flange 3 also is mounted. The upper flange 2 has a channel 21 therein that continues into the hub 22.

Although modifications and changes may be suggested by those skilled in the art, it is the intention of the inventors to embody within the patent warranted hereon all changes and modifications as reasonably and properly come within the scope of their contribution to the art.

The features disclosed in the foregoing description, in the claims and/or in the accompanying drawings may, both separately and in any combination thereof, be material for realising the invention in diverse forms thereof.

## Claims

1. A tape drive (8) comprising:
a housing having a housing bottom with an opening (10) therein;
a fan assembly, said fan assembly, when rotated, drawing air in an air flow from an exterior of said housing to an interior of said housing through said opening (10) in said housing bottom;
a motor assembly (14) mounted to said housing bottom
**characterized in that**
a reel (1) is disposed in an interior of said housing, said reel (1) having a central hub (22) and a top flange (2) and a bottom flange (3) mounted to said hub (22) spaced from each other and adapted to receive a winding of magnetic recording tape therebetween;
the fan assembly is mounted to a bottom surface of said bottom flange (3) of said reel (1), said fan assembly being disposed in said opening (10) in said housing bottom when said take-up reel (1) is disposed in said interior of said housing; and
the motor assembly (14) is in driving engagement with said reel (1) to rotate said reel (1) and comprises a motor mounted on a motor mount plate (15), wherein said motor mount plate (15) is attached at an exterior of said housing bottom overlying said opening (10), wherein said opening (10) has an opening edge, and
wherein said tape drive (8) comprises a plurality of grommets (11) mounted in said interior of said tape drive (8) next to said opening edge and projecting to said exterior of said opening edge beyond said housing bottom, said motor mount plate (15) being fastened to said grommets (11) and forming a gap between said motor mount plate (15) and said housing bottom through which said air flow proceeds.

2. A tape drive (8) as claimed in claim 1 wherein said housing has a chassis (9) forming said housing bottom.

3. A tape drive (8) as claimed in claim 1 further comprising a distributor baffle (16) disposed in said interior of said housing in said air flow path for selectively directing said air flow in said interior of said housing.

4. A tape drive (8) as claimed in claim 3 further comprising a circuit board (9) disposed in said housing, spaced from said housing bottom, and wherein said distributor baffle (16) directs at least a portion of said air flow between said housing bottom and said circuit board (9).

5. A tape drive (8) as claimed in claim 4 wherein said distributor baffle (16) is a circular baffle having a central opening therein in which said motor assembly (14) is disposed with an annular gap (19) between said circular opening and said motor assembly (14), with said fan assembly rotating inside said circular baffle (16).

6. A tape drive (8) as claimed in claim 5 wherein said circular baffle (16) has a plurality of openings (17) therein and wherein said circuit board (9) has a plurality of openings therein at least partially overlapping with respective ones of said openings (17) in said circular baffle (16) allowing passage of said air flow through said openings (17) in said circular baffle (16) and said openings in said printed circuit board (9) to a space between said circuit board (9) and said housing bottom.

7. A reel (1) for a magnetic recording tape comprising:
a hub (22); and
a top flange (2) and a bottom flange (3) concentrically mounted to said hub (22) in spaced apart relation and adapted to receive a winding of magnetic recording tape therebetween, said bottom flange (3) having a bottom exterior surface;
**characterized in that**
a fan assembly is mounted to said bottom exterior surface of said bottom flange (3).

8. A reel (1) as claimed in claim 7 wherein said fan assembly comprises a fan assembly hub (5) substantially concentrically with said hub (22), and a plurality of fan blades (4) radiating outwardly from said fan assembly hub (5).

## Patentansprüche

1. Bandlaufwerk (8), das aufweist:
ein einen Gehäuseboden mit einer Öffnung (10) darin aufweisendes Gehäuse;
eine Gebläseanordnung, wobei die Gebläseanordnung, wenn sie in Rotation versetzt wird, Luft in einem Luftstrom von einer Außenseite des Gehäuses in einen Innenraum des Gehäuses durch die Öffnung (10) in dem Gehäuseboden anzieht;
eine an dem Gehäuseboden befestigte Motoranordnung (14),
**dadurch gekennzeichnet, daß**
eine Spule (1) in einem Innenraum des Gehäuses angeordnet ist, wobei die Spule (1) eine zentrale Nabe (22) sowie einen oberen Kranz (2) und einen unteren Kranz (3) aufweist, welche an der Nabe (22) voneinander beabstandet angebracht und derart ausgelegt sind, daß zwischen ihnen die Wicklung eines magnetischen Aufzeichnungsbandes aufgenommen wird;
die Gebläseanordnung an einer unteren Fläche des unteren Kranzes (3) der Spule (1) angebracht ist, wobei die Gebläseanordnung in der Öffnung (10) in dem Gehäuseboden angeordnet ist, während die Aufwickelspule (1) in dem Innenraum des Gehäuses angeordnet ist; und
die Motoranordnung (14) in antreibender Verbindung mit der Spule (1) steht, um die Spule (1) in Rotation zu versetzen, und einen auf einer Motorbefestigungsplatte (15) angebrachten Motor aufweist, wobei die Motorbefestigungsplatte (15) an einer Außenseite des Gehäusebodens die Öffnung (10) überlagernd befestigt ist, wobei die Öffnung (10) eine Öffnungskante hat, und
wobei das Bandlaufwerk (8) eine Vielzahl von in dem Innenraum des Bandlaufwerkes (8) neben der Öffnungskante und vorstehend zu der Außenseite der Öffnungskante jenseits des Gehäusebodens angebrachten Durchführungen aufweist, die Motorbefestigungsplatte (15) an die Durchführungen (11) befestigt ist und eine Lücke zwischen der Motorbefestigungsplatte (15) und dem Gehäuseboden ausbildet, durch welche der Luftstrom verläuft.

2. Bandlaufwerk (8) nach Anspruch 1, wobei das Gehäuse ein den Gehäuseboden ausbildendes Chassis (9) aufweist.

3. Bandlaufwerk (8) nach Anspruch 1, darüber hinaus eine Verteilerleitwand (16) aufweisend, welche in dem Innenraum des Gehäuses in dem Luftstromweg zur selektiven Führung des Luftstromes in dem Innenraum des Gehäuses angebracht ist.

4. Bandlaufwerk (8) nach Anspruch 3, darüber hinaus eine Platine (9) aufweisend, die in dem Gehäuse beabstandet von dem Gehäuseboden angeordnet ist, und bei dem die Verteilerleitwand (16) zumindest einen Teil des Luftstroms zwischen den Gehäuseboden und die Platine (9) führt.

5. Bandlaufwerk (8) nach Anspruch 4, wobei die Verteilerleitwand (16) eine ringförmige Leitwand mit einer zentralen Öffnung darin ist, wobei die Motoranordnung (14) mit einem Ringspalt (19) zwischen der kreisförmigen Öffnung und der Motoranordnung (14) angeordnet ist, wobei die Gebläseanordnung innerhalb der ringförmigen Leitwand (16) rotiert.

6. Bandlaufwerk (8) nach Anspruch 5, wobei die ringförmige Leitwand (16) eine Vielzahl von Öffnung (17) darin aufweist und wobei die Platine (9) eine Vielzahl von Öffnungen darin hat, die zumindest teilweise mit den zugehörigen der Öffnung (17) in der ringförmigen Leitwand (16) überlappen, wobei der Durchfluß des Luftstromes durch die Öffnungen (17) in der ringförmigen Leitwand (16) und die Öffnungen in der gedruckten Platine (9) zu einem Raum zwischen der Platine (9) und dem Gehäuseboden ermöglicht wird.

7. Spule (1) für ein magnetisches Aufnahmeband, die aufweist:
eine Nabe (22); und
einen oberen Kranz (2) und einen unteren Kranz (3) konzentrisch an die Nabe (22) voneinander beabstandet angebracht und dazu ausgelegt eine Wicklung eines magnetischen Aufnahmebandes dazwischen aufzunehmen, wobei der untere Kranz (3) eine untere Außenfläche aufweist; **dadurch gekennzeichnet, daß**
eine Gebläseanordnung an der unteren Außenfläche des unteren Kranzes (3) angebracht ist.

8. Spule (1) nach Anspruch 7, bei der die Gebläseanordnung eine Gebläseanordnungsnabe (5), die im wesentlichen konzentrisch zu der Nabe (22) ist, und eine Vielzahl von Gebläseschaufeln (4), die strahlenförmig nach außen von der Gebläseanordnungsnabe (5) wegführen, aufweist.

## Revendications

1. Dispositif d'entraînement de bande (8), comportant:
un boîtier ayant une partie inférieure du boîtier munie d'une ouverture (10) dans celle-ci,
un ensemble formant ventilateur, ledit ensemble formant ventilateur, lorsqu'il est mis en rotation, attirant de l'air vers l'intérieur dans un écoulement d'air à partir d'un extérieur dudit boîtier vers un intérieur dudit boîtier à travers ladite ouverture (10) située dans ladite partie inférieure du boîtier,
un ensemble formant moteur (14) monté sur ladite partie inférieure du boîtier,
**caractérisé en ce que**
une bobine (1) est disposée dans un intérieur dudit boitier, ladite bobine (1) ayant un moyeu central (22), et un rebord supérieur (2) et un rebord inférieur (3) montés sur ledit moyeu (22) espacés l'un de l'autre, et adaptés pour recevoir un enroulement de bande d'enregistrement magnétique entre ceux-ci,
l'ensemble formant ventilateur est monté sur une surface inférieure dudit rebord inférieur (3) de ladite bobine (1), ledit ensemble formant ventilateur étant disposé dans ladite ouverture (10) située dans ladite partie inférieure du boîtier lorsque ladite bobine d'enroulement (1) est disposée dans ledit intérieur dudit boîtier, et
l'ensemble formant moteur (14) est en prise d'entraînement avec ladite bobine (1) pour faire tourner ladite bobine (1), et comporte un moteur monté sur une plaque de montage de moteur (15), ladite plaque de montage de moteur (15) étant fixée au niveau d'un extérieur de ladite partie inférieure de boîtier au-dessus de ladite ouverture (10), ladite ouverture ayant un bord d'ouverture, et
dans lequel ledit dispositif d'entraînement de bande (8) comporte une pluralité de guides (11) montés dans ledit intérieur dudit dispositif d'entraînement de bande (8) à côté dudit bord d'ouverture, et faisant saillie vers ledit extérieur dudit bord d'ouverture au-delà de ladite partie inférieure de boîtier, ladite plaque de montage de moteur (15) étant fixée sur lesdits guides (11) et formant un espace entre ladite plaque de montage de moteur (15) et ladite partie inférieure de boîtier, à travers lequel ledit écoulement d'air progresse.

2. Dispositif d'entraînement de bande (8) selon la revendication 1, dans lequel ledit boîtier a un châssis (9) formant ladite partie inférieure de boîtier.

3. Dispositif d'entraînement de bande (8) selon la revendication 1, comportant en outre un déflecteur distributeur (16) disposé dans ledit intérieur dudit boîtier dans ledit trajet d'écoulement d'air pour diriger sélectivement ledit écoulement d'air dans ledit intérieur dudit boîtier.

4. Dispositif d'entraînement de bande (8) selon la revendication 3, comportant en outre une carte de circuit imprimé (9) disposée dans ledit boîtier, espacée de ladite partie inférieure de boîtier, et dans lequel ledit déflecteur distributeur (16) dirige au moins une partie dudit écoulement d'air entre ladite partie inférieure de boîtier et ladite carte de circuit imprimé (9).

5. Dispositif d'entraînement de bande (8) selon la revendication 4, dans lequel ledit déflecteur distributeur (16) est un déflecteur circulaire ayant une ouverture centrale dans celui-ci, ledit ensemble formant moteur (14) étant disposé avec un espace annulaire (19) entre ladite ouverture circulaire et ledit ensemble formant moteur (14), ledit ensemble formant ventilateur tournant à l'intérieur dudit déflecteur circulaire (16).

6. Dispositif d'entraînement de bande (8) selon la revendication 5, dans lequel ledit déflecteur circulaire (16) a une pluralité d'ouvertures (17) dans celui-ci, et dans lequel ladite carte de circuit imprimé (9) a une pluralité d'ouvertures dans celle-ci chevauchant au moins partiellement des respectives parmi lesdites ouvertures (17) dans ledit déflecteur circulaire (16), en permettant un passage dudit écoulement d'air à travers lesdites ouvertures (17) dans ledit déflecteur circulaire (16), et lesdites ouvertures dans ladite carte de circuit imprimé (9), vers un espace situé entre ladite carte de circuit imprimé (9) et ladite partie inférieure de boîtier.

7. Bobine (1) pour une bande d'enregistrement magnétique, comportant :
un moyeu (22), et
un rebord supérieur (2) et un rebord inférieur (3) montés de manière concentrique sur ledit moyeu (22) dans une relation espacée, et adaptés pour recevoir un enroulement de bande d'enregistrement magnétique entre ceux-ci, ledit rebord inférieur (3) ayant une surface extérieure inférieure,
**caractérisé en ce que**
un ensemble formant ventilateur est monté sur ladite surface extérieure inférieure dudit rebord inférieur (3).

8. Bobine (1) selon la revendication 7, dans laquelle ledit ensemble formant ventilateur comporte un moyeu d'ensemble formant ventilateur (5) sensiblement de manière concentrique par rapport audit moyeu (22), et une pluralité d'aubes de ventilateur (4) rayonnant vers l'extérieur à partir moyeu d'ensemble formant ventilateur (5).
